# EUROPEAN PATENT SPECIFICATION

(11) **EP 1 515 609 B1**
(45) Date of publication and mention of the grant of the patent: **23.04.2008**
(21) Application number: 03732684.0
(22) Date of filing: 04.06.2003
(51) Int. Cl.: A01N 41/10, A01N 35/06, A01N 57/20

(54) **HERBICIDAL COMPOSITION**
HERBIZIDE ZUSAMMENSETZUNG
COMPOSITION HERBICIDE

(30) Priority: 13.06.2002 GB 0213654
(43) Date of publication of application: 23.03.2005
(73) Proprietor: Syngenta Limited, Guildford Surrey GU2 7YH (GB)
(72) Inventor: PIPER, Catherine Julia, Syngenta Limited, Bracknell, Berkshire RG42 6EY (GB); STOCK, David, Syngenta Limited, Bracknell, Berkshire RG42 6EY (GB); HALL, Gavin John, Syngenta Limited, Bracknell, Berkshire RG42 6EY (GB); SUTTON, Peter Bernard, Syngenta Limited, Bracknell, Berkshire RG42 6EY (GB)
(74) Representative: Swift, Jane Elizabeth Berrisford
(86) International application number: PCT/GB2003/002423
(87) International publication number: WO 2003/105588

(56) References cited:
- WO-A-01/95722
- WO-A-02/21919
- WO-A-93/04585
- US-A- 5 912 207

## Description

The present invention relates to a herbicidal composition, to its preparation and use. In particular is relates to a herbicidal composition which demonstrates improved activity over the prior art compositions, but with little or no increase in crop damage.

The protection of crops from weeds and other vegetation that inhibits crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use. Commercial herbicides and some that are still in development are described in The Pesticide Manual, 12th edition, published in 2000 by the British Crop Protection Council.

Many herbicides also damage crop plants. The control of weeds in a growing crop therefore requires the use of so-called 'selective' herbicides which are chosen to kill the weeds while leaving the crop undamaged. Few selective herbicides are selective enough to kill all the weeds and leave the crop completely untouched. In practice, the use of most selective herbicides is actually a balance between applying enough herbicide to acceptably control most of the weeds whilst causing only minimal crop damage.

One important class of selective herbicides are 2-(substituted benzoyl)-1,3-cyclohexanedione compounds disclosed, *inter alia,* in United States Patent Nos. 4,780,127, 4,938,796, 5,006,158 and 5,089,046. A particularly preferred 2-(substituted benzoyl)-1,3-cyclohexanedione is mesotrione, chemical name 2-(2-nitro-4-methylsulfonylbenzoyl)-cyclohexanedione. This is known largely for use to selectively control weeds in a corn (maize) crop, both before the crop emerges from the ground (pre-emergent) and after (post-emergent). A problem that is seen with mesotrione, when used as the acid, is a lack of stability in an aqueous environment.

One preferred form of mesotrione is as a metal salt or chelate, for example a copper salt. These metal chelates are disclosed in US 5 912 207 where they are shown to have unexpectedly superior stability in water compared to unchelated mesotrione. WO 01/095722 discloses that metal chelates of 2-(substituted benzoyl)-1,3-cyclohexanedione compounds can have improved selectivity over the unchelated compounds.

One problem with the metal chelates of 2-(substituted benzoyl)-1,3-cyclohexanedione is that their overall activity is lower than that of the parent compound itself. We have discovered that by adding an organic phosphate, phosphonate or phosphinate adjuvant to the metal chelate, we can produce mesotrione metal chelate compositions with a combination of an unexpectedly high level of activity (comparable to that obtained with non-chelated mesotrione acid) with little or no increase in crop damage. The low level of crop damage coupled with a high level of weed control extends the margin of safety and can be referred to as 'safening'. This surprising improvement in activity and safening enables mesotrione to be used more effectively and with less risk of crop damage.

EP0579052 discloses a plant treatment agent comprising at least one biocide and an accelerator which may be *inter alia* a phosphate. US 2 927 014 discloses the use of a range of organic phosphonate and phosphinate compounds as herbicides. WO93/04585 discloses a herbicidal composition comprising at least one phosphonate or phosphinate and at least one compound selected from phenmedipham, desmedipham, metamitron, lenacil, ethofumesate and chloridazon. WO94/18837 teaches the use of a specific phosphonate, bis (2-ethylhexyl) 2-ethylhexyl phosphonate, as adjuvant to improve the bioperformance of specified of herbicides. However, the particular use of phosphonate and phosphinate in improving the efficacy and selectivity of 2-(substituted benzoyl)-1,3-cyclohexanedione metal chelates is wholly unexpected.

Accordingly, the present invention provides a herbicidal composition comprising:

### i) a metal chelate of a 2-(substituted benzoyl)-1,3-cyclohexanedione of formula (I)

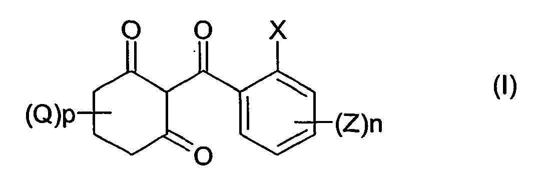

wherein X represents a halogen atom; a straight- or branched-chain alkyl or alkoxy group containing up to six carbon atoms which is optionally substituted by one or more groups -OR¹ or one or more halogen atoms; or a group selected from nitro, cyano,-CO₂R², -S(O)ₘR¹, -0(CH₂)ᵣOR¹, -COR², -NR²R³, -SO₂NR²R³, -CONR²R³, -CSNR²R³ and -OSO₂R₄;
R¹ represents a straight- or branched-chain alkyl group containing up to six carbon atoms which is optionally substituted by one or more halogen atoms;
R² and R³ each independently represents a hydrogen atom; or a straight- or branched-chain alkyl group containing up to six carbon atoms which is optionally substituted by one or more halogen atoms;
R⁴ represents a straight-or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)ₘR⁵, OS(O)ₘR⁵, (C₁-C₆)-alkyl, (C₁-C₆)alkoxy, (C₁-C₆)haloalhyl, (C₁-C₆)haloalkoxy, carboxy, (C₁-C₆)-alkylcarbonyloxy, (C₁-C₆)alkoxycarbonyl, (C₁-C₆)alhylcarbonyl, amino, (C₁-C₆)-alkylamino, (C₁-C₆)dialkylamino having independently the stated number of carbon atoms in each alkyl group, (C₁-C₆)alkylcarbonylamino, (C₁-C₆)alkoxycarbonylamino, (C₁-C₆)alkylaminocarbonylamino, (C₁-C₆)dialkylaminocarbonylamino having independently the stated number of carbon atoms in each alkyl group, (C₁-C₆)-alkoxycarbonyloxy, (C₁-C₆)alkylaminocarbonyloxy, (C₁-C₆)diakylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R⁵ represents cyano, -COR⁶, -CO₂R⁶ or-S(O)ₘR⁷;
R⁶ represents hydrogen or straight- or branched-chain alkyl group containing up to six carbon atoms;
R⁷ represents (C₁-C₆)alkyl, (C₁-C₆)haloalkyl, (C₁-C₆)cyanoalkyl, (C₃-C₈)cycloalkyl optionally substituted with halogen, cyano or (C₁-C₄)alkyl; or phenyl optionally substituted with one to three of the same or different halogen, nitro, cyano, (C₁-C₄)haloakyl, (C₁-C₄)alkyl, (C₁-C₄)alkoxy or-S(O)ₘR⁸;
R⁸ represents (C₁-C₄)alkyl;
each Q independently represents (C₁-C₄)alkyl or -CO₂R⁹ wherein R⁹ is (C₁-C₄)alkyl;
m is zero, one or two;
n is zero or an integer from one to four;
r is one, two or three; and
p is zero or an integer from one to six; and

### ii) an organic phosphate, phosphonate or phosphinate adjuvant.

Suitably, X is chloro, bromo, nitro, cyano, C₁C₄ alkyl, -CF₃, -S(O)ₘR¹ or -OR¹; each Z is independently chloro, bromo, nitro, cyano, C₁-C₄ alkyl, -CF₃, -OR¹, -OS(O)ₘR⁵ or -S(O)ₘR⁵; n is one or two; and p is zero.

Preferably, the 2-(substituted benzoyl)-1,3-cyclohexanedione of formula (I) is selected from the group consisting of 2-(2'nitro-4'methylsulphonylbenzoyl)-1,3-cyclohexanedione, 2-(2'-nitro-4'-methylsulphonyloxybenzoyl)-1,3-cyclohexanedione, 2-(2'-chloro-4'-methylsulphonylbenzoyl)-1,3-cyclohexanedione, 4,4-dimethyl-2-(4-methanesulphonyl-2-nitrobenzoyl)-1,3-cyclohexanedione, 2-(2-chloro-3-ethoxy-4-methanesulphonylbenzoyl)-5-methyl-1,3-cyclohexanedione and 2-(2-chloro-3-ethoxy-4-ethanesulphonylbenzoyl)-5-methyl-1,3-cyclohexanedione.

The metal ion forming the chelate is suitably a di- or trivalent metal ion such as, but not restricted to, Cu⁺², Co⁺², Zn⁺², Ni⁺², Ca⁺², Mn⁺², Al⁺³, Ti⁺³ and Fe⁺³. The preferred metal ions are divalent transition metal ions, particularly Cu⁺², Ni⁺², Zn⁺², Mn⁺² and Co⁺², with Cu⁺² being especially preferred. Any appropriate salt that would be a source of a di- or trivalent metal ion may be used to form the metal chelate of the 2-(substituted benzoyl)-1,3-cyclohexanedione of formula (I) in accordance with this invention. Particularly suitable salts include: chlorides, sulphates, nitrates, carbonates, phosphates and acetates.

Suitably, the phosphate, phosphonate or phosphinate adjuvant is a compound of formula II 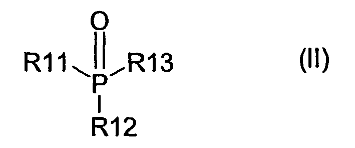 wherein R¹¹ is an alkoxy group containing from 4 to 20 carbon atoms or a group -[OCH₂CHR¹⁴]ₜ-OR¹⁵wherein R¹⁴ is hydrogen, methyl or ethyl, t is from 0 to 50 and R¹⁵ is hydrogen or an alkyl group containing from 1 to 20 carbon atoms; and R¹² and R¹³ are independently (i) an alkyl or alkenyl group containing from 4 to 20 carbon atoms; (ii) optionally substituted phenyl; (iii) an alkoxy group containing from 4 to 20 carbon atoms or (iv) a group -[OCH₂CHR¹⁴]ₜ-OR¹⁵ as herein defined; or (v) a group of formula (III) 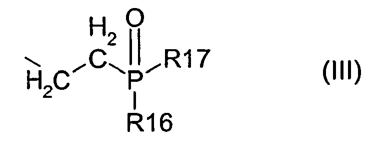 wherein R¹⁶ is an alkoxy group containing from 4 to 20 carbon atoms or a group -[OCH₂CHR¹⁴]ₜOR¹⁵ as herein defined and R¹⁷ is an alkyl group containing from 4 to 20 carbon atoms, optionally substituted phenyl, an alkoxy group containing from 4 to 20 carbon atoms or a group -[OCH₂CHR¹⁴]ₜ-OR¹⁵ as herein defined; and wherein t is from 0 to ten.

The term "alkyl" as used herein, including when used in expressions such as "alkoxy", includes linear or branched chain alkyl groups. Optional substituents which may be present in optionally substituted phenyl include C₁₋₄ alkyl and halogen.

In a first embodiment of the invention, there is provided a herbicidal composition comprising a metal chelate of a 2-(substituted benzoyl)-1,3-cyclohexanedione of formula (I) as hereinbefore defined, and a phosphate of formula (II), wherein R¹¹, R¹² and R¹³ are all independently alkoxy groups.

In a second embodiment of the invention, there is provided a herbicidal composition comprising a metal chelate of a 2-(substituted benzoyl)-1,3-cyclohexanedione of formula (I) as hereinbefore defined, and a phosphonate of formula (II), wherein R¹¹ and R¹² are both independently alkoxy groups and R¹³ is an alkyl, alkenyl or optionally substituted phenyl group.

In a third embodiment of the invention, there is provided a herbicidal composition comprising a metal chelate of a 2-(substituted benzoyl)-1,3-cyclohexanedione of formula (I) as hereinbefore defined, and a phosphinate of formula (II), wherein R¹ is an alkoxy group and R¹² and R¹³ are both independently an alkyl, alkenyl or optionally substituted phenyl group.

Optional alkoxylation of an ester group is represented by the group -[OCH₂CHR¹⁴]ₜ-OR¹⁵ as herein defined. It is preferred that the value of t is from 0 to 10 and more preferably from 0 to 5. If a range of degrees of alkoxylation is present, t may represent an average value and is not necessarily an integer. Similarly, mixed alkoxylation may take place such that different values of R¹⁴ are present in the group -[OCH₂CHR¹⁴]ₜ. It is preferred that R¹⁵ is an alkyl group containing from 1 to 8 carbon atoms. If t is 0, the group -[OCH₂CHR¹⁴]ₜ-OR¹⁵ becomes alkoxy and when t is 0 therefore the group -OR¹⁵ is suitably alkoxy containing from 4 to 20 carbon atoms.

When the compound of formula (II) is a phosphate it is preferred that each of the groups R¹¹, R¹² and R¹³ are alkoxy groups containing from 4 to 10 carbon atoms. It is especially preferred that each of R¹¹, R¹² and R¹³ contain from 4 to 8 carbon atoms. Preferred phosphates are tri-2-ethylhexylphosphate and tributyl phosphate.

When the compound of formula (II) is a phosphonate, it is preferred that each of the groups R¹¹ and R¹² are alkoxy groups containing from 4 to 10 carbon atoms and R¹³ is an alkyl group containing from 4 to 10 carbon atoms. Suitable phosphonates are disclosed in WO 98/00021 and the present invention also includes equivalents wherein the relevant alkyl chain length is lower than that disclosed in WO 98/00021. It is especially preferred that each of R¹¹, R¹² and R¹³ contain from 4 to 8 carbon atoms. Preferred phosphonates are bis-(2-ethylhexyl)-2-ethylhexylphosphonate, bis-(2-ethylhexyl-octylphosphonate and bis-butyl-butylphosphonate.

When the compound of formula (II) is a phosphinate, it is preferred that R¹¹ is an alkoxy group containing from 4 to 10 carbon atoms and R¹² and R¹³ are both alkyl groups containing from 4 to 10 carbon atoms. It is especially preferred that each of R¹¹, R¹² and R¹³ contain from 4 to 8 carbon atoms. Suitable phosphinates are disclosed in WO 98/00021 and the present invention also includes equivalents wherein the relevant alkyl chain length is lower than that disclosed in WO 98/00021.

In the context of the present invention, the term "herbicidal composition" is intended to refer to pre-mix concentrate compositions and to the diluted tank-mix compositions.

Herbicidal compositions of the present invention may be formulated as a pre-mix concentrate which is diluted with, dissolved in or dispersed in water shortly before use. In the present invention, the concentrate generally comprises between 30 and 950g/litre of the 2-(substituted benzoyl)-1,3-cyclohexanedione of formula (I), preferably 100 to 800g/l, most preferably 150 to 500g/l. The phosphate, phosphonate or phosphinate adjuvant added to the concentrate composition at a weight ratio of the herbicide to the phosphate, phosphonate or phosphinate of from 25:1 and 1:25 and especially 10:1 and 1:10 more especially 1:5 and 5:1. In addition, one or more further active ingredients, for example a second herbicide, may be added to the concentrate composition.

Alternatively, the herbicidal compositions of the present invention are the diluted spray tank composition. The spray tank composition may be obtained by diluting a pre-mix concentrate as described above to the required concentration and adding any other required adjuvants. Alternatively, the spray tank composition may be obtained by diluting a concentrate composition comprising only the 2-(substituted benzoyl)-1,3-cyclohexanedione of formula (I) to the required concentrate, and subsequently adding the required amount of phosphate, phosphonate or phosphinate along with any other required adjuvants. Adjuvants are normally applied as a percentage of the spray volume applied per hectare. Water volume per hectare is normally about 200 litres/ha but can vary from 50 to greater than 3000 for special applications. Adjuvants are nominally applied at volumes of from 0.05% to 1.0% of the spray volume per hectare. Taking 200 1/ha as an average, typical volume rates of adjuvant will therefore be in the region of 100g (0.05%) to 2000g (1.0%). Typical herbicide rates range from 10g/ha to 1kg. Therefore one skilled in the art will expect ratios which cover these typical use rates for both active and adjuvant. These relate directly to ratio (by weight) of compound of formula (I) to the compound of formula (II) from 50:1 to 1:400. It is preferred that the ratio by weight of the compound of formula (I) to the compound of formula (II) is from 25:1 and 1:25 and especially 10:1 and 1:10 more especially 1:5 and 5:1.

When the herbicidal composition of the invention is a pre-mix concentrate, it may thus be formulated as granules, as wettable powders, as suspension concentrates, as emulsifiable concentrates, as granular formulations, powders or dusts, as flowables, as solutions, as suspensions or emulsions. These formulations may contain as little as about 0.5% to as much as about 95% or more by weight of active ingredient. The optimum amount for any given compound will depend upon formulation, application equipment, and nature of the plants to be controlled.

Wettable powders are in the form of finely divided particles that disperse readily in water or other liquid carriers. The particles contain the active ingredient retained in a solid matrix. Typical solid matrices include fuller's earth, kaolin clays, silicas and other readily wet organic or inorganic solids. Wettable powders normally contain about 5% to about 95% of the active ingredient plus a small amount of wetting, dispersing, or emulsifying agent. If liquid compounds of Formula II are formulated as dry products such as WP (or WG), there will be a requirement to absorb/adsorb these into/onto suitable carriers for this formulation type.

Suspension concentrates are high concentration suspensions of solid herbicide in a liquid carrier such as water or an oil.

Emulsifiable concentrates are homogeneous liquid compositions dispersible in water or other liquid, and may consist entirely of the active compound with a liquid or solid emulsifying agent, or may also contain a liquid carrier, such as xylene, heavy aromatic naphthas, isophorone and other non-volatile organic solvents. In use, these concentrates are dispersed in water or other liquid and normally applied as a spray to the area to be treated. The amount of active ingredient may range from about 0.5% to about 95% of the concentrate.

Granular formulations include both extrudates and relatively coarse particles, and are usually applied without dilution to the area in which suppression of vegetation is desired. Typical carriers for granular formulations include sand, fuller's earth, attapulgite clay, bentonite clays, montmorillonite clay, vermiculite, perlite and other organic or inorganic materials which absorb or which can be coated with the active compound. Granular formulations normally contain about 5% to about 25% active ingredients which may include surface-active agents such as heavy aromatic naphthas, kerosene and other petroleum fractions, or vegetable oils; and/or stickers such as dextrins, glue or synthetic resins. Water emulsifiable granules can also be produced by appropriate means which are well know to those skilled in the art.

Dusts are free-flowing admixtures of the active ingredient with finely divided solids such as talc, clays, flours and other organic and inorganic solids that act as dispersants and carriers.

Formulations which are amenable to the production of mixed products are especially important since a compound of formula II will generally be an oil (or soluble in an organic solvent) and the 2-(substituted benzoyl)-1,3-cyclohexanedione derivatives of formula (I) will generally be highly insoluble in water and therefore most easily formulated as a dispersion in water (or an oil). Thus dispersions of multiple phases are the likely formulations of choice.

Other useful formulations for herbicidal applications include simple solutions of the active ingredient in a solvent in which it is completely soluble at the desired concentration, such as acetone, alkylated naphthalenes, xylene and other organic solvents. Pressurized sprayers, wherein the active ingredient is dispersed in finely divided form as a result of vaporization of a low boiling dispersant solvent carrier, may also be used.

Many of these formulations include wetting, dispersing or emulsifying agents. Examples are alkyl and alkylaryl sulphonates and sulphates and their salts; polyhydric alcohols; polyethoxylated alcohols; esters and fatty amines. These agents, when used, normally comprise from 0.1% to 15% by weight of the formulation.

Another suitable additive is crop oil concentrate (COC) which is well known for herbicides and is a mixtures of petroleum oils and non-ionic surfactants, available as, for example AGRI-DEX, PENETRATOR, and PENETRATOR PLUS and from Helena Chemical Company, HER-BIMAX from UAP, ES CROP OIL PLUS from Gromark, and CROP OIL PLUS, from Wilfarm, (83% parafinic oil, 17% emulsifier surfactant). Other possible additives include urea ammonium nitrate, a fertiliser, methylated seed oil and ammonium sulphate.

Each of the above formulations can be prepared as a package containing the herbicide together with other ingredients of the formulation (other active ingredients, diluents, emulsifiers, surfactants, etc.). The formulations can also be prepared by a tank mix method, in which the ingredients are obtained separately and combined at the grower site.

The compositions of the present invention have been shown to be particularly effective in the control of weeds, particularly when compared to the metal chelate of a compound of formula (I) in the absence of phosphate, phosphonate or phosphinate. Accordingly, a further aspect of the invention provides a process for the control of weeds, said process comprising applying a herbicidally effective amount of a composition according to the invention to the locus of the weeds.

Furthermore, an increase in activity generally results in a corresponding increase in crop damage, often to the extent that the composition cannot be used in the presence of useful crops. However, the increase in activity seen with the compositions of the invention is only accompanied by a very small increase in crop damage, or by no increase. Thus the compositions are more selective that those without phosphate, phosphonate, or phosphinate. Accordingly, the present invention further provides a method of improving the selectivity of a metal chelate of a 2-(substituted benzoyl)-1,3-cyclohexanedione of formula (I) when applied to unwanted vegetation in a crop of useful plants, said method comprising the applying of a herbicidally effective amount of a composition according to the present invention.

The composition of the invention may be used against a large number of agronomically important weeds, including *Stellaria, Nasturtium, Agrostis, Digitaria, Avena, Setaria, Sinapis, Lolium, Solanum, Phaseolus, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Viola,* and *Veronica.* For purposes of the present invention, the term "weeds" includes undesirable crop species such as volunteer crops.

Controlling means killing, damaging, or inhibiting the growth of the weeds.

The "locus" is intended to include soil, seeds, and seedlings, as well as established vegetation.

The benefits of the present invention are seen most when the composition is applied to kill weeds in a growing crop, such as Maize (corn). The benefit of the invention is seen most with post-emergent application, but pre-emergent application is also possible.

The present invention is illustrated by the following Example in which all parts and percentages are by weight unless otherwise stated.

### EXAMPLE 1

The activity and phytotoxicity (extent of crop damage) of a number of compositions of the present invention was assessed. The weeds were *Echinochloa crusgalli* (ECHCG), *Amaranthus tamariscinus* (AMARE), *Ipomoea hederacea* (IPOHE), *polygonum convolvulus* (POLCO), *Xanthium strumarium,* (XANST) and *Digitaria sanguinalis* (DIGSA), (results of activity given in Table 1) and two maize varieties for crop damage assessment were ZEAMX 'FURIO', ZEAMX 'MARISTA' (results of crop damage are given in Table 2). Products were sprayed at a range of g/ha (see tables) in 2001/ha water volume and assessed after 21 days for bioefficacy. The activity is expressed as the percentage of weeds controlled, and phytotoxicity is expressed as the percentage of damage to the crop; a level of crop damage below 10%, preferably below 8% is considered acceptable.

**Table 1: Comparison of activity of mesotrione copper salt with standard adjuvants vs. activity of mesotrione copper salt with a compound of formula (II)**

| Treatment | Rate Mesotrione g/ha | ECHCG | XANST | AMARE | IPOHE | POLCO | DIGSA |
|---|---|---|---|---|---|---|---|
| Mesotrione Copper salt + 0.5% MSO | 10 | | 94 | 80 | 70 | 82 | |
| | 20 | 15 | 90 | 70 | 70 | 80 | |
| | 40 | 35 | 95 | 78 | 83 | 92 | |
| | 80 | 78 | 96 | 87 | 83 | 95 | |
| | 160 | 93 | 97 | 95 | 92 | 99 | |
| | 320 | 93 | | | | | |
| Mesotrione Copper salt + 1% COC + 2.5% UAN | 10 | | 93 | | 60 | 60 | |
| | 20 | 5 | 95 | | 70 | 55 | 33 |
| | 40 | 48 | 96 | | 80 | 85 | 78 |
| | 80 | 77 | 98 | | 89 | 87 | 85 |
| | 160 | 90 | 94 | | 89 | 98 | 94 |
| | 320 | 88 | | | | | 100 |
| MesotrioneCopper salt + 0.5% tributylphosphate | 10 | | 98 | 85 | 83 | 99 | |
| | 20 | 30 | 93 | 84 | 80 | 92 | |
| | 40 | 30 | 98 | 97 | 89 | 80 | |
| | 80 | 64 | 96 | 90 | 83 | 99 | |
| | 160 | 97 | 98 | 98 | 90 | 99 | |
| | 320 | 97 | | | | | |
| Mesotrione Copper salt + 0.5% tri-(2-ethylhexyl) phosphate | 10 | | 97 | | 73 | 60 | |
| | 20 | 53 | 98 | | 84 | 65 | 75 |
| | 40 | 68 | 97 | | 80 | 97 | 83 |
| | 80 | 98 | 98 | | 90 | 98 | 98 |
| | 160 | 100 | 99 | | 95 | 98 | 100 |
| | 320 | 100 | | | | | 100 |
| Mesotrione Copper salt + 0.5% bis 2-ethylhexyl) hydrogen phosphate | 10 | | 95 | | 43 | 63 | |
| | 20 | 2 | 96 | | 55 | 53 | 18 |
| | 40 | 3 | 98 | | 80 | 73 | 53 |
| | 80 | 25 | 93 | | 80 | 83 | 70 |
| | 160 | 83 | 96 | | 93 | 98 | 75 |
| | 320 | 92 | | | | | 95 |
| Mesotrione Copper salt + 0.5% dibutyl butyl phosphonate | 10 | | 99 | 99 | 92.5 | 99.5 | |
| | 20 | 72.5 | 99.5 | 97.5 | 90 | 100 | |
| | 40 | 98 | 98.5 | 99.5 | 95 | 95 | |
| | 80 | 98 | 99 | 99.5 | 96.5 | 99.5 | |
| | 160 | 99.5 | 99.5 | 100 | 96.5 | 100 | |
| | 320 | 100 | | | | | |
| Mesotrione Copper salt + 0.5% bis(2-ethylhexyl)2-ethylhexyl phosphonate | 10 | | 97 | | 60 | 65 | |
| | 20 | 75 | 97 | | 85 | 89 | 80 |
| | 40 | 83 | 97 | | 86 | 97 | 90 |
| | 80 | 100 | 98 | | 89 | 98 | 100 |
| | 160 | 100 | 98 | | 93 | 98 | 100 |
| | 320 | 100 | | | | | 100 |
| Mesotrione Copper Salt + 0.5% bis(2- ethylhexyl)1- octylphosphonate | 10 | | 95 | | 80 | 69 | |
| | 20 | 35 | 80 | | 80 | 69 | |
| | 40 | 43 | 89 | | 86 | 94 | |
| | 80 | 55 | 90 | | 91 | 96 | |
| | 160 | 60 | 90 | | 93 | 98 | |
| | 320 | | | | | | |

| | | | | | | | |
|---|---|---|---|---|---|---|---|
| UAN - Urea Ammonium Nitrate COC - Crop Oil Concentrate MSO - Methylated Seed Oil | | | | | | | |

**Table 2: Comparison of crop damage caused by mesotrione copper salt with standard adjuvants vs. crop damage caused by mesotrione copper salt with a compound of formula (II)**

| Treatment | Rate | ZEAMX 'FURIO' | ZEAMX 'MARISTA' |
|---|---|---|---|
| Mesotrione Copper salt + 0.5% MSO | 160 | 0 | 0 |
| | 320 | 0 | 1 |
| | 480 | | |
| Mesotrione Copper salt + 0.5% MSO + 0.5% UAN | 160 | 0 | 0 |
| | 320 | 0 | 0 |
| | 480 | | |
| Mesotrione Copper salt + 0.5% tributyl phosphate | 160 | 0 | 2 |
| | 320 | 0 | 0 |
| | 480 | | |
| Mesotrione Copper salt + 0.5% dibutyl butyl phosphonate | 160 | 3 | 1 |
| | 320 | 1 | 1 |
| | 480 | 3 | 1 |
| Mesotrione Copper salt + 0.5% bis(2-ethylhexyl)-2-ethylhexyl phosphonate | 160 | 4 | 4 |
| | 320 | 5 | 4 |
| | 480 | 4 | 4 |
| Mesotrione Copper salt + 0.5% bis(2-ethylhexyl)-1-octyl phosphonate | 160 | 0 | 1 |
| | 320 | 1 | 0 |
| | 480 | 1 | 2 |
| Mesotrione Copper salt + 0.5% bis(2-ethylhexyl)hydrogen phosphate | 160 | 0 | 0 |
| | 320 | 0 | 0 |
| | 480 | | |

## Claims

1. A herbicidal composition comprising:
(i) a metal chelate of a 2-(substituted benzoyl)-1,3-cyclohexanedione of formula (I) 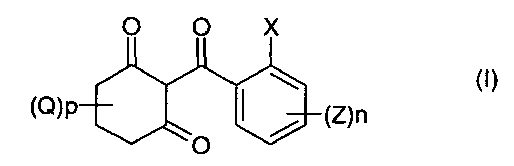 wherein X represents a halogen atom; a straight- or branched-chain alkyl or alkoxy group containing up to six carbon atoms which is optionally substituted by one or more groups -OR¹ or one or more halogen atoms; or a group selected from nitro, cyano, -CO₂R², -S(O)ₘR¹,-O(CH₂),OR¹, -COR², -NR²R³, -SO₂NR²R³, -CONR²R³, -CSNR²R³ and -OSO₂R₄;
R¹ represents a straight- or branched-chain alkyl group containing up to six carbon atoms which is optionally substituted by one or more halogen atoms;
R² and R³ each independently represents a hydrogen atom; or a straight- or branched-chain alkyl group containing up to six carbon atoms which is optionally substituted by one or more halogen atoms;
R⁴ represents a straight-or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)ₘR⁵, OS(O)ₘR⁵,
(C₁-C₆)alkyl, (C₁-C₆)alkoxy, (C₁-C₆)haloalkyl, (C₁-C₆)haloalkoxy, carboxy,
(C₁-C₆)alkylcarbonyloxy, (C₁-C₆)alkoxycarbonyl, (C₁-C₆)alkylcarbonyl, amino, (C₁-C₆)alkylamino, (C₁-C₆)dialkylamino having independently the stated number of carbon atoms in each alkyl group, (C₁-C₆)alkylcarbonylamino,
(C₁-C₆)alkoxycarbonylamino, (C₁-C₆)alkylaminocarbonylamino,
(C₁-C₆)dialkylaminocarbonylamino having independently the stated number of carbon atoms in each alkyl group, (C₁-C₆)alkoxycarbonyloxy,
(C₁-C₆)alkylaminocarbonyloxy, (C₁-C₆)dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R⁵ represents cyano, -COR⁶, -CO₂R⁶ or S(O)ₘR⁷;
R⁶ represents hydrogen or straight- or branched-chain alkyl group containing up to six carbon atoms;
R⁷ represents (C₁-C₆)alkyl, (C₁-C₆)haloalkyl, (C₁-C₆)cyanoalkyl,
(C₃-C₈)cycloalkyl optionally substituted with halogen, cyano or (C₁-C₄)alkyl; or phenyl optionally substituted with one to three of the same or different halogen, nitro, cyano, (C₁-C₄)haloalkyl, (C₁-C₄)alkyl, (C₁-C₄)alkoxy or-S(O)ₘR⁸;
R⁸ represents (C₁-C₄)alkyl;
each Q independently represents (C₁-C₄)alkyl or -CO₂R⁹ wherein R⁹ is
(C₁-C₄)alkyl;
m is zero, one or two;
n is zero or an integer from one to four;
r is one, two or three; and
p is zero or an integer from one to six; and
(ii) an organic phosphate, phosphonate or phosphinate adjuvant, wherein the phosphate, phosphonate or phosphinate adjuvant is a compound of formula II 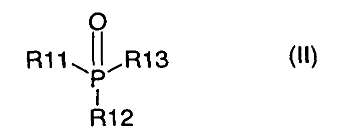 wherein R¹¹ is an alkoxy group containing from 4 to 20 carbon atoms or a group -[OCH₂CHR¹⁴]ₜ-OR¹⁵ wherein R¹⁴ is hydrogen, methyl or ethyl, t is from 0 to 50 and R¹⁵ is hydrogen or an alkyl group containing from 1 to 20 carbon atoms; and R¹² and R¹³ are independently (a) an alkyl or alkenyl group containing from 4 to 20 carbon atoms; (b) optionally substituted phenyl; (c) an alkoxy group containing from 4 to 20 carbon atoms or (d) a group -[OCH₂CHR¹⁴]ₜ-OR¹⁵ as herein defined; or (e) a group of formula (III) 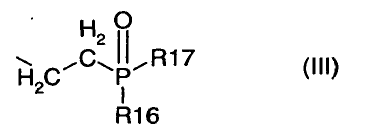 wherein R¹⁶ is an alkoxy group containing from 4 to 20 carbon atoms or a group -[OCH₂CHR¹⁴]ₜ-OR¹⁵ as herein defined and R¹⁷ is an alkyl group containing from 4 to 20 carbon atoms, optionally substituted phenyl, an alkoxy group containing from 4 to 20 carbon atoms or a group -[OCH₂CHR¹⁴]ₜ-OR¹⁵ as herein defined; and wherein t is from 0 to ten.

2. A herbicidal composition according to claim 1, wherein X is chloro, bromo, nitro, cyano, C₁-C₄ alkyl, -CF₃, -S(O)ₘR¹, or -OR¹.

3. A herbicidal composition according to any one or claims 1 or 2, wherein each Z is independently chloro, bromo, nitro, cyano, C₁-C₄ alkyl, -CF₃, -OR¹, -OS(O)ₘR⁵ or -S(O)ₘR⁵.

4. A herbicidal composition according to any one of claims 1 to 3, wherein n is one or two.

5. A herbicidal composition according to any one of claims 1 to 4, wherein p is zero.

6. A herbicidal composition according to any one of claims 1 to 5, wherein the compound of formula (I) is selected from the group consisting of 2-(2'nitro-4'methylsulphonylbenzoyl)-1,3-cyclohexanedione, 2-(2'-nitro-4'-methylsulphonyloxy benzoyl)-1,3-cyclohexanedione, 2-(2'-chloro-4'-methylsulphonylbenzoyl)-1,3-cyclohexanedione, 4,4-dimethyl-2-(4-methanesulphonyl-2-nitrobenzoyl)-1,3-cyclohexanedione, 2-(2-chloro-3-ethoxy-4-methanesulphonylbenzoyl)-5-methyl-1,3-cyclohexanedione and 2-(2-chloro-3-ethoxy-4-ethanesulphonylbenzoyl)-5-methyl-1,3-cyclohexanedione.

7. A herbicidal composition according to any one of claims 1-6, wherein the compound of formula (II) is a phosphate in which R¹¹, R¹² and R¹³ are all independently alkoxy groups.

8. A herbicidal composition according to any one of claims 1-6, wherein the compound of formula (II) is a phosphonate in which R¹¹ and R¹² are both independently alkoxy groups and R¹³ is an alkyl, alkenyl or optionally substituted phenyl group.

9. A herbicidal composition according to any one of claims 1-6, wherein the compound of formula (II) is a phosphinate in which R¹¹ is an alkoxy group and R¹² and R¹³ are both independently an alkyl, alkenyl or optionally substituted phenyl group.

10. A process for the control of weeds, said process comprising applying to the locus of the weeds a herbicidally effective amount of a composition as claimed in any one of claims 1 to 9.

11. A method of improving the selectivity of a metal chelate of a 2-(substituted benzoyl)-1,3-cyclohexanedione of formula (I) as defined in claim 1, when applied to unwanted vegetation in a crop of useful plants, said method comprising the applying of a herbicidally effective amount of a composition as claimed in any one of claims 1 to 9.

## Patentansprüche

1. Herbizide Zusammensetzung, umfassend
(i) ein Metall-Chelat von einem 2-(substituierten Benzoyl)-1,3-cyclohexandion der Formel (I) 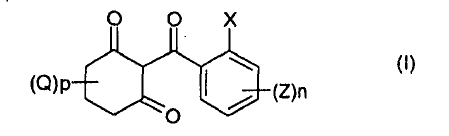 worin X ein Halogenatom; eine gerad- oder verzweigtkettige Alkyl- oder Alkoxygruppe, die bis zu 6 Kohlenstoffatome enthält, die gegebenenfalls substituiert ist mit einer oder mehreren Gruppen -OR¹ oder einem oder mehreren Halogenatomen; oder eine Gruppe, ausgewählt aus Nitro, Cyano, -CO₂R², -S(O)ₘR¹, -O(CH₂)ᵣOR¹, -COR², -NR²R³, -SO₂NR²R³, -CONR²R³, -CSNR²R³ und -OSO₂R⁴, wiedergibt;
R¹ eine gerad- oder verzweigtkettige Alkylgruppe, die bis zu sechs Kohlenstoffatome enthält, die gegebenenfalls mit einem oder mehreren Halogenatomen substituiert ist, wiedergibt;
R² und R³ jeweils unabhängig ein Wasserstoffatom; oder eine gerad- oder verzweigtkettige Alkylgruppe, die bis zu 6 Kohlenstoffatome enthält, die gegebenenfalls mit einem oder mehreren Halogenatomen substituiert ist, wiedergeben;
R⁴ eine gerad- oder verzweigtkettige Alkyl-, Alkenyl- oder Alkinylgruppe, die bis zu 6 Kohlenstoffatome enthält, gegebenenfalls substituiert mit einem oder mehreren Halogenatomen; oder eine Cycloalkylgruppe, die 3 bis 6 Kohlenstoffatome enthält, wiedergibt;
jedes Z unabhängig Halogen, Nitro, Cyano, S(O)ₘR⁵, OS(O)ₘR⁵, (C₁-C₆)-Alkyl, (C₁-C₆)-Alkoxy, (C₁-C₆)-Halogenalkyl, (C₁-C₆)-Halogenalkoxy, Carboxy, (C₁-C₆)-Alkylcarbonyloxy, (C₁-C₆)-Alkoxycarbonyl, (C₁-C₆)-Alkylcarbonyl, Amino, (C₁-C₆)-Alkylamino, (C₁-C₆) -Dialkylamino, das unabhängig die ausgewiesene Anzahl an Kohlenstoffatomen in jeder Alkylgruppe aufweist, (C₁-C₆)-Alkylcarbonylamino, (C₁-C₆) -Alkoxycarbonylamino, (C₁-C₆)-Alkylaminocarbonylamino, (C₁-C₆) -Dialkylaminocarbonylamino, das unabhängig die ausgewiesene Anzahl an Kohlenstoffatomen in jeder Alkylgruppe aufweist, (C₁-C₆)-Alkoxycarbonyloxy, (C₁-C₆)-Alkylaminocarbonyloxy, (C₁-C₆)-Dialkylcarbonyloxy, Phenylcarbonyl, substituiertes Phenylcarbonyl, Phenylcarbonyloxy, substituiertes Phenylcarbonyloxy, Phenylcarbonylamino, substituiertes Phenylcarbonylamino, Phenoxy oder substituiertes Phenoxy wiedergibt;
R⁵ Cyano, -COR⁶, -CO₂R⁶ oder S(O)ₘR⁷ wiedergibt;
R⁶ Wasserstoff oder eine gerad- oder verzweigtkettige Alkylgruppe, die bis zu 6 Kohlenstoffatome enthält, wiedergibt;
R⁷ (C₁-C₆)-Alkyl, (C₁-C₆)-Halogenalkyl, (C₁-C₆)-Cyanoalkyl, (C₃-C₈)-Cycloalkyl, gegebenenfalls substituiert mit Halogen, Cyano oder (C₁-C₄)-Alkyl; oder Phenyl, gegebenenfalls substituiert mit einem bis drei von dem gleichen oder verschiedenen Halogen, Nitro, Cyano, (C₁-C₄) -Halogenalkyl, (C₁-C₄)-Alkyl, (C₁-C₄)-Alkoxy oder -S(O)ₘR⁸, wiedergibt;
R⁸ (C₁-C₄) -Alkyl wiedergibt;
jedes Q unabhängig (C₁-C₄)-Alkyl oder -CO₂R⁹ wiedergibt, worin R⁹ (C₁-C₄) -Alkyl darstellt;
m 0, 1 oder 2 ist;
n 0 oder eine ganze Zahl von 1 bis 4 ist;
r 1, 2 oder 3 ist; und
p 0 oder eine ganze Zahl von 1 bis 6 ist; und
(ii) einen organischen Phosphat-, Phosphonat- oder Phosphinat-Hilfsstoff, wobei der Phosphat-, Phosphonat- oder Phosphinat-Hilfsstoff eine Verbindung der Formel II 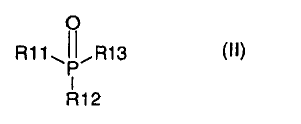 darstellt,
worin R¹¹ eine Alkoxygruppe, die 4 bis 20 Kohlenstoffatome enthält, oder eine Gruppe - [OCH₂CHR¹⁴]ₜ-OR¹⁵ darstellt, worin R¹⁴ Wasserstoff, Methyl oder Ethyl darstellt, t 0 bis 50 ist und R¹⁵ Wasserstoff oder eine Alkylgruppe, die 1 bis 20 Kohlenstoffatome enthält, darstellt; und R¹² und R¹³ unabhängig (a) eine Alkyl- oder Alkenylgruppe, die 4 bis 20 Kohlenstoffatome enthält; (b) gegebenenfalls substituiertes Phenyl; (c) eine Alkoxygruppe, die 4 bis 20 Kohlenstoffatome enthält, oder (d) eine Gruppe -[OCH₂CHR¹⁴]ₜ-OR¹⁵, wie hierin definiert; oder (e) eine Gruppe der Formel (III) 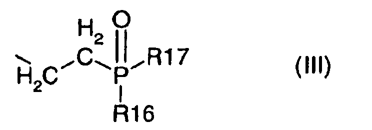 darstellen, worin R¹⁶ eine Alkoxygruppe, die 4 bis 20 Kohlenstoffatome enthält, oder eine Gruppe - [OCH₂CHR¹⁴] ₜ-OR¹⁵, wie hierin definiert, darstellt und R¹⁷ eine Alkylgruppe, die 4 bis 20 Kohlenstoffatome enthält, gegebenenfalls substituiertes Phenyl, eine Alkoxygruppe, die 4 bis 20 Kohlenstoffatome enthält, oder eine Gruppe - [OCH₂CHR¹⁴]ₜ-OR¹⁵, wie hierin definiert; und worin t 0 bis 10 ist, darstellt.

2. Herbizide Zusammensetzung nach Anspruch 1, worin X Chlor, Brom, Nitro, Cyano, C₁-C₉-Alkyl, -CF₃, -S(O)ₘR¹ oder -OR¹ darstellt.

3. Herbizide Zusammensetzung nach einem der Ansprüche 1 oder 2, worin jedes Z unabhängig Chlor, Brom, Nitro, Cyano, C₁-C₄-Alkyl, -CF₃, -OR¹, -OS(O)ₘR⁵ oder -S(O)ₘR⁵ darstellt.

4. Herbizide Zusammensetzung nach einem der Ansprüche 1 bis 3, worin n 1 oder 2 ist.

5. Herbizide Zusammensetzung nach einem der Ansprüche 1 bis 4, worin p 0 ist.

6. Herbizide Zusammensetzung nach einem der Ansprüche 1 bis 5, worin die Verbindung der Formel (I) ausgewählt ist aus der Gruppe, bestehend aus 2-(2'-Nitro-4'-methylsulfonylbenzoyl)-1,3-cyclohexandion, 2-(2'-Nitro-4'-methylsulfonyloxybenzoyl)-1,3-cyclohexandion, 2-(2'-Chlor-4'-methylsulfonylbenzoyl) -1, 3-cyclohexandion, 4,4-Dimethyl-2-(4-methansulfonyl-2-nitrobenzoyl)-1,3-cyclohexandion, 2-(2-Chlor-3-ethoxy-4-methansulfonylbenzoyl) -5-methyl-1, 3-cyclohexandion und 2-(2-Chlor-3-ethoxy-4-ethansulfonylbenzoyl)-5-methyl-1,3-cyclohexandion.

7. Herbizide Zusammensetzung nach einem der Ansprüche 1 bis 6, worin die Verbindung der Formel (II) ein Phosphat darstellt, worin R¹¹, R¹² und R¹³ alle unabhängig Alkoxygruppen darstellen.

8. Herbizide Zusammensetzung nach einem der Ansprüche 1 bis 6, worin die Verbindung der Formel (II) ein Phosphonat darstellt, worin R¹¹ und R¹² beide unabhängig Alkoxygruppen darstellen und R¹³ eine Alkyl-, Alkenyl- oder gegebenenfalls substituierte Phenylgruppe darstellt.

9. Herbizide Zusammensetzung nach einem der Ansprüche 1 bis 6, worin die Verbindung der Formel (II) ein Phosphinat darstellt, worin R¹¹ eine Alkoxygruppe darstellt und R¹² und R¹³ beide unabhängig eine Alkyl-, Alkenyl- oder gegebenenfalls substituierte Phenylgruppe darstellen.

10. Verfahren für die Bekämpfung von Unkräutern, wobei das Verfahren Applizieren auf den Standort der Unkräuter einer herbizid wirksamen Menge einer wie in einem der Ansprüche 1 bis 9 beanspruchten Zusammensetzung umfasst.

11. Verfahren zum Verbessern der Selektivität eines Metall-Chelats von einem 2-(substituierten Benzoyl)-1,3-cyclohexadion der Formel (I), wie in Anspruch 1 definiert, wenn auf unerwünschte Vegetation in einer Kultur von Nutzpflanzen appliziert, wobei das Verfahren das Applizieren einer herbizid wirksamen Menge einer wie in einem der Ansprüche 1 bis 9 beanspruchten Zusammensetzung umfasst.

## Revendications

1. Composition herbicide comprenant :
(i) un chélate métallique d'une 2-benzoyl substitué)-1,3-cyclohexanedione de formule (I) 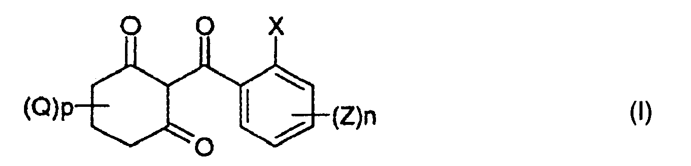 dans laquelle X représente un atome d'halogène ; un groupe alkyle ou alcoxy à chaîne linéaire ou ramifiée contenant jusqu'à six atomes de carbone qui est éventuellement substitué par un ou plusieurs groupes-OR¹ ou un ou plusieurs atomes d'halogène ; ou un groupe choisi parmi un groupe nitro, cyano, -CO₂R², -S(O)ₘR¹, -O(CH₂)ᵣOR¹, -COR², -NR²R³,-SO₂NR²R³, -CONR²R³, -CSNR²R³ et -OSO₂R ⁴;
R¹ représente un groupe alkyle à chaîne linéaire ou ramifiée contenant jusqu'à six atomes de carbone qui est éventuellement substitué par un ou plusieurs atomes d'halogène ;
R² et R³ représentent chacun indépendamment un atome d'hydrogène ; ou un groupe alkyle à chaîne linéaire ou ramifiée contenant jusqu'à six atomes de carbone qui est éventuellement substitué par un ou plusieurs atomes d'halogène ;
R⁴ représente un groupe alkyle, alcényle ou alcynyle à chaîne linéaire ou ramifiée contenant jusqu'à six atomes de carbone éventuellement substitué par un ou plusieurs atomes d'halogène ; ou un groupe cycloalkyle contenant de trois à six atomes de carbone ;
chaque Z représente indépendamment un groupe halo, nitro, cyano, -S(O)ₘR⁵, -OS(O)ₘR⁵, alkyle (en C₁-C₆), alcoxy (en C₁-C₆), haloalkyle (en C₁-C₆), haloalcoxy (en C₁-C₆), carboxy, alkyl(en C₁-C₆)carbonyloxy, alcoxy(en C₁-C₆)carbonyle, alkyl(en C₁-C₆)carbonyle, amino, alkyl(en C₁-C₆)amino, dialkyl(en C₁-C₆)amino ayant indépendamment le nombre mentionné d'atomes de carbone dans chaque groupe alkyle, alkyl(en C₁-C₆)carbonylamino, alcoxy(en C₁-C₆)carbonylamino, alkyl(en C₁-C₆)aminocarbonylamino, dialkyl(en C₁-C₆)aminocarbonylamino ayant indépendamment le nombre mentionné d'atomes de carbone dans chaque groupe alkyle, alcoxy(en C₁-C₆)carbonyloxy, alkyl(en C₁-C₆)aminocarbonyloxy, dialkyl(en C₁-C₆)-carbonyloxy, phénylcarbonyle, phénylcarbonyle substitué, phénylcarbonyloxy, phénylcarbonyloxy substitué, phénylcarbonylamino, phénylcarbonylamino substitué, phénoxy ou phénoxy substitué ;
R⁵ représente un groupe cyano, -COR⁶, -CO₂R² ou -S(O)ₘR⁷ ;
R⁶ représente un atome d'hydrogène ou un groupe alkyle à chaîne linéaire ou ramifiée contenant jusqu'à six atomes de carbone ;
R⁷ représente un groupe alkyle (en C₁-C₆), haloalkyle (en C₁-C₆), cyanoalkyle (en C₁-C₆), cycloalkyle (en C₃-C₈) éventuellement substitué par un atome d'halogène, un groupe cyano ou alkyle (en C₁-C₄) ; ou phényle éventuellement substitué par un à trois identiques ou différents atome d'halogène, groupe nitro, cyano, haloalkyle (en C₁-C₄), alkyle (en C₁-C₄), alcoxy (en C₁-C₄), ou -S(O)ₘR⁸ ;
R⁸ représente un groupe alkyle (en C₁-C₄) ;
chaque Q représente indépendamment un groupe alkyle (en C₁-C₄) ou -CO₂R⁹ dans lequel R⁹ est un groupe alkyle (en C₁-C₄) ;
m est zéro, un ou deux ;
n est zéro ou un nombre entier de un à quatre ;
r est un, deux ou trois ; et
p est zéro ou un ombre entier de un à six ; et
(ii) un adjuvant phosphate, phosphonate ou phosphinate organique dans laquelle l'adjuvant phosphate, phosphonate ou phosphinate est un composé de formule (II) 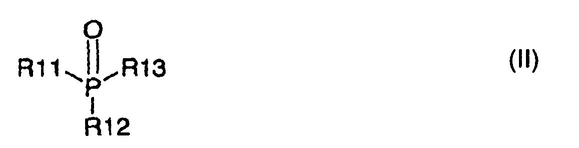 dans laquelle R¹¹ est un groupe alcoxy contenant de 4 à 20 atomes de carbone ou un groupe -[OCH₂CHR¹⁴]ₜ-OR¹⁵ dans lequel R¹⁴ est un atome d'hydrogène, un groupe méthyle ou éthyle, t est de 0 à 50 et R¹⁵ est un atome d'hydrogène ou un groupe alkyle contenant de 1 à 20 atomes de carbone ; et R¹² et R¹³ sont indépendamment (a) un groupe alkyle ou alcényle contenant e 4 à 20 atomes de carbone ; (b) un groupe phényle éventuellement substitué ; (c) un groupe alcoxy contenant de 4 à 20 atomes de carbone ou (d) un groupe -[OCH₂CHR¹⁴]ₜ-OR¹⁵ tel que défini ici ; (e) un groupe de formule (III) 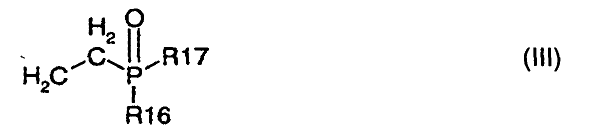 dans laquelle R¹⁶ est un groupe alcoxy contenant de 4 à 20 atomes de carbone ou un groupe -[OCH₂CHR¹⁴]ₜ-OR¹⁵ tel que défini ici et R¹⁷ est un groupe alkyle contenant de 4 à 20 atomes de carbone, un groupe phényle éventuellement substitué, un groupe alcoxy contenant de 4 à 20 atomes de carbone ou un groupe -[OCH₂CHR¹⁴]ₜOR¹⁵ tel que défini ici ; et dans laquelle t est de 0 à dix.

2. Composition herbicide selon la revendication 1, dans laquelle X est un groupe chloro, bromo, nitro, cyano, alkyle (en C₁-C₄), -CF₃, -S(O)ₘR¹, ou -OR¹.

3. Composition selon l'une quelconque des revendications 1 ou 2, dans laquelle chaque Z est indépendamment un groupe chloro, bromo, nitro, cyano, alkyle (en C₁-C₄), -CF₃, -OR¹, -S(O)ₘR⁵ ou -S(O)ₘR⁵.

4. Composition herbicide selon l'une quelconque des revendications 1 à 3, dans laquelle n est un ou deux.

5. Composition herbicide selon l'une quelconque des revendications 1 à 4, dans laquelle p est zéro.

6. Composition herbicide selon l'une quelconque des revendications 1 à 5, dans laquelle le composé de formule (I) est choisi dans le groupe constitué par la 2-(2'-nitro-4'-méthylsulfonylbenzoyl)-1,3-cyclohexanedione, la 2-(2'-nitro-4'-méthylsulfonyloxybenzoyl)-1,3-cyclohexanedione, la 2-(2'-chloro-4'-méthylsulfonylbenzoyl)-1,3-cyclohexanedione, la 4,4-diméthyl-2-(4-méthanesulfonyl-2-nitrobenzoyl)-1,3-cyclohexane-dione, la 2-(2-chloro-3-éthoxy-4-méthanesulfonylbenzoyl)-5-méthyl-1,3-cyclohexanedione et la 2-(2-chloro-3-éthoxy-4-éthanesulfonylbenzoyl)-5-méthyl-1,3-cyclohexanedione.

7. Composition herbicide selon l'une quelconque des revendications 1 à 6, dans laquelle le composé de formule (II) est un phosphate dans lequel R¹¹, R¹² et R¹³ sont tous indépendamment des groupes alcoxy.

8. Composition herbicide selon l'une quelconque des revendications 1 à 6, dans laquelle le composé de formule (II) est un phosphonate dans lequel R¹¹ et R¹² sont tous deux indépendamment des groupes alcoxy et R¹³ est un groupe alkyle, alcényle ou phényle éventuellement substitué.

9. Composition herbicide selon l'une quelconque des revendications 1 à 6, dans laquelle le composé de formule (II) est un phosphinate dans lequel R¹¹ est un groupe alcoxy, et R¹² et R¹³ sont tous deux indépendamment un groupe alkyle, alcényle ou phényle éventuellement substitué.

10. Procédé de lutte contre les mauvaises herbes, ledit procédé comprenant l'application à l'endroit où se trouvent les mauvaises herbes d'une quantité efficace du point de vue herbicide d'une composition telle que revendiquée dans l'une quelconque des revendications 1 à 9.

11. Procédé d'amélioration de la sélectrivité d'un chélate métallique d'une 2-(benzoyl substitué)-1,3-cyclohexanedione de formule (I) telle que définie dans la revendication 1, quand on l'applique à une végétation non désirée dans une récolte de plantes utiles, ledit procédé comprenant l'application d'une quantité efficace du point de vue herbicide d'une composition telle que revendiquée dans l'une quelconque des revendications 1 à 9.
